(19) Europäisches Patentamt
European Patent Office
Office européen des brevets

(11) **EP 0 679 543 B1**

(12) **EUROPÄISCHE PATENTSCHRIFT**

(45) Veröffentlichungstag und Bekanntmachung des Hinweises auf die Patenterteilung:
**22.10.1997 Patentblatt 1997/43**

(51) Int. Cl.$^6$: **B60C 9/20**

(21) Anmeldenummer: **95890067.2**

(22) Anmeldetag: **30.03.1995**

(54) **Fahrzeugreifen**

Vehicle tyre

Bandage pneumatique pour véhicule

(84) Benannte Vertragsstaaten:
**AT DE ES FR GB IT LU**

(30) Priorität: **28.04.1994 AT 892/94**

(43) Veröffentlichungstag der Anmeldung:
**02.11.1995 Patentblatt 1995/44**

(73) Patentinhaber: **Semperit Reifen Aktiengesellschaft**
**A-2514 Traiskirchen (AT)**

(72) Erfinder:
• **Drosg, Wolfgang, D.I.**
  **A-1100 Wien (AT)**
• **Stumpf, Horst, D.I.**
  **A-2551 Enzesfeld (AT)**
• **Karlsson, Björn, D.I.**
  **A-2352 Gumpoldskirchen (AT)**

(74) Vertreter: **Vinazzer, Edith, Dipl.-Ing.**
  **Schönburgstrasse 11/7**
  **1040 Wien (AT)**

(56) Entgegenhaltungen:
EP-A- 0 237 462       EP-A- 0 413 582
EP-A- 0 414 892       EP-A- 0 430 851
EP-A- 0 481 080       EP-A- 0 558 037
WO-A-88/05624         DE-A- 3 928 424
FR-A- 2 663 265

• PATENT ABSTRACTS OF JAPAN vol. 15 no. 243 (C-842) ,21.Juni 1991 & JP-A-03 076882 (BRIDGESTONE CORP.)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft einen Fahrzeugreifen in Radialbauart mit einem Laufstreifen, einem Paar von Seitenwänden, einem Paar von Wulstbereichen mit Wulstkernen, einer insbesondere einlagigen Karkasse und einem Gürtel mit insbesondere zwei Gürtellagen, welche in Gummi eingebettete Corde aus Stahl aufweisen, die innerhalb einer Gürtellage parallel zueinander verlaufen, wobei die Corde in zumindest einer Gürtellage eine Zugfestigkeit $R \leq 4.000$ N/mm$^2$ und eine Querschnittsfläche A besitzen und in einer Fadenteilung T (Anzahl der Corde pro 10 cm) $\leq 65$ angeordnet sind.

Um den Treibstoffverbrauch von Kraftfahrzeugen herabzusetzen wurde in den letzten Jahren der Verringerung des Rollwiderstandes von PKW-Reifen verstärkt Augenmerk geschenkt. Diesbezügliche Entwicklungsarbeiten zielten und zielen insbesondere darauf ab, einerseits durch neue Laufstreifenmischungen und andererseits durch eine Verringerung des Reifengewichtes eine Verringerung des Rollwiderstandes und somit des Treibstoffverbrauches zu erreichen. Einen Beitrag zur Höhe des Reifengesamtgewichtes leisten nun die im Reifenkörper eingebetteten Festigkeitsträger, insbesondere die Stahlcorde in den Gürtellagen und, wenn auch in einem geringeren Ausmaß, die Corde in der Karkasse. Ein PKW-Reifen heutiger Bauart besitzt im allgemeinen zwei Gürtellagen mit Festigkeitsträgern aus Stahlcord. Vielfach wird dabei ein Stahlcord der Konstruktion 2 + 2 eingesetzt, bei der beispielsweise eine Gruppe von zwei parallel verlaufenden Filamenten über eine Cordseele, die ebenfalls aus zwei parallelen Filamenten besteht, herumgewickelt ist. Der Durchmesser der Filamente beträgt üblicherweise 0,25 mm. Die Fadenteilung (Anzahl der Corde/10 cm in einer Gürtellage) wird bei dieser Cordkonstruktion etwa zwischen 90 und 110 gewählt. Aus der EP-A 0237462 ist ferner eine 1 x 2 Stahlcordkonstruktion für die Gürtellagen von Reifen bekannt, die somit aus zwei miteinander verdrehten Stahlfilamenten besteht. Der Durchmesser der Filamente beträgt um 0,3 mm. Die Fadenteilung innerhalb der Gürtellage soll zwischen 86 und 110 betragen. Die bekannten Gürtelkonstruktionen sind so ausgelegt, daß der Reifen im Gürtelbereich einen Berstdruck größer 20 bar besitzt.

Aus Patent Abstracts of Japan, Vol. 15, No. 143, der die JP-A-03 076 882 betrifft, ist ein pneumatischer Fahrzeugreifen der eingangs genannten Art bekannt, in dessen Gürtellagen ein Stahlcord der Konstruktion 1 x 3 enthalten ist, dessen Filamente einen Durchmesser von 0,28 bis 0,32 mm besitzen. Die Zugfertigkeit des eingesetzten Stahlcordes beträgt zwischen 320 und 440 kg/mm$^2$, die Fadenteilung der Corde in den Gürtellagen wird zwischen 50 und 70 Corde pro 10 cm gewählt.

Die Erfindung hat sich nun die Aufgabe gestellt, gewichtsreduzierende Maßnahmen im Gürtelbereich zu setzen, die jedoch gleichzeitig gewährleisten, daß der Reifen im Fahrverhalten, auch bei höheren Geschwindigkeiten, entspricht und bei hochdynamischer Wechselbeanspruchung die erforderliche Haltbarkeit aufweist.

Gelöst wird die gestellte Aufgabe erfindungsgemäß dadurch, daß das Produkt A x R x T $\leq 28.000$ ist, wobei bei einer Zugfestigkeit R des Stahlcordes von 2.700 bis 2.900 N/mm$^2$ A x R x T $\geq 14.000$ und bei einer Zugfestigkeit R des Stahlcordes von 2.900 bis 4.000 N/mm$^2$ A x R x T $\geq 16.000$ ist.

Für die Haltbarkeit eines Reifens, für sein Fahrverhalten, insbesondere bei höheren Geschwindigkeiten und seine Stabilität bei hochdynamischer Wechselbeanspruchung ist es wesentlich, daß über den Gürtelbereich Druckkräfte aufgenommen werden können. Das ist mit Gürtelkonstruktionen, wie sie gemäß der vorliegenden Erfindung vorgeschlagen werden, gewährleistet. Dabei wurde festgestellt, daß das Produkt aus Querschnittsfläche des Cordes, Zugfestigkeit und Fadenteilung, wie es in Anspruch 1 definiert ist, als eine Kennzahl für die erforderliche Gürtelfestigkeit gilt, innerhalb der angegebenen Grenzwerte jedoch einen Spielraum zur Auslegung des Gürtels insbesondere hinsichtlich Komfort, Fahrverhalten oder Rollwiderstand läßt. Die erzielbare Material- und somit Gewichtsreduktion wirkt sich in jedem Fall vorteilhaft auf eine Reduzierung des Rollwiderstandes aus. Reifen mit nach der Erfindung gestalteten Gürtellagen können ferner einen Berstdruck im Gürtelbereich aufweisen, der wesentlich geringer ist als jener von Reifen nach dem Stand der Technik und in der Größenordnung von etwa 12 bis 17 bar liegt. Das ist vollkommen ausreichend, da ein PKW-Reifen, auch bei der Montage, einem Innendruck in dieser Höhe nicht ausgesetzt wird. Die Gürtelkonstruktionen nach dem Stand der Technik sind daher materialmäßig überdimensioniert, was zu einem hohen Reifengewicht und einem höheren Rollwiderstand beiträgt, und verleihen dem Reifen im Gürtelbereich unnötigerweise einen viel zu hohen Berstdruck.

Bevorzugt wird im Rahmen der Erfindung ein Stahlcord der Konstruktion 1 x 2 eingesetzt, dessen Gesamtquerschnittsfläche zwischen 0,14 und 0,26 mm$^2$ beträgt. Dabei wird insbesondere ein Stahlcord gewählt, dessen Einzelfilamente einen kreisförmigen Querschnitt mit einem Durchmesser zwischen 0,3 bis 0,4 mm besitzen.

Beim Einsatz dieser Stahlcordkonstruktion wird ferner nach einem weiteren Merkmal der Erfindung die Fadenteilung im Bereich zwischen 40 bis 60 Corde pro 10 cm gewählt. In diesem Bereich ergibt sich bei einer voll ausreichenden Gürtelfestigkeit eine merkliche Reduktion im Rollwiderstand und im Reifengewicht. Bei einer weiteren bevorzugten Ausführungsform der Erfindung ist der Stahlcord ein Einzeldraht mit einer Querschnittsfläche von 0,09 bis 0,3 mm$^2$. Wird dabei ein Einzeldraht von kreisförmigem Querschnitt gewählt, so sollte dessen Durchmesser zwischen 0,35 bis 0,6 mm, insbesondere zwischen 0,4 bis 0,55 mm, betragen.

Die Fadenteilung bei Verwendung eines Einzelcordes wird ebenfalls bevorzugt im Bereich zwischen 40 bis 60 Fäden pro 10 cm gewählt.

Bei einem Reifen, der mit zwei Gürtellagen versehen ist, ist es von besonderem Vorteil, wenn beide Gürtellagen gemäß der vorliegenden Erfindung gestaltet bzw. ausgeführt sind.

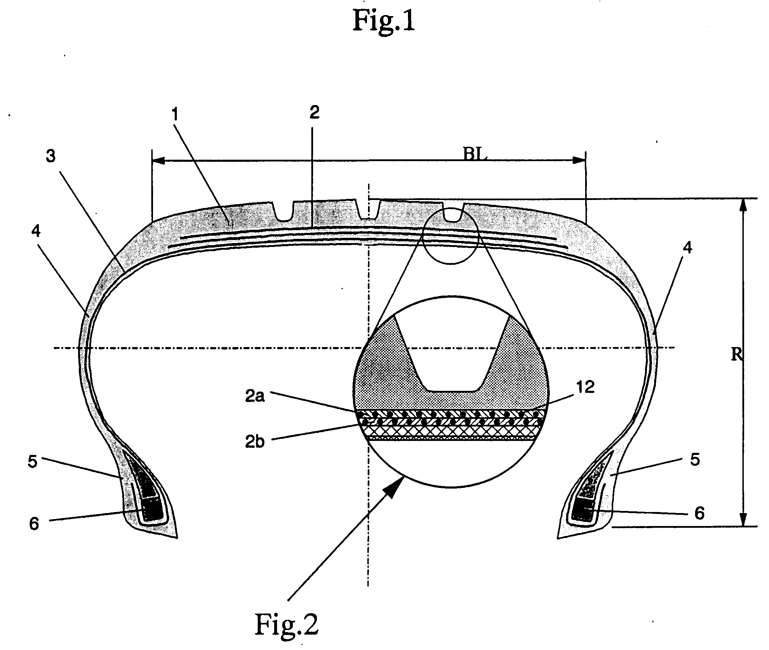

Weitere Merkmale, Vorteile und Einzelheiten der Erfindung ergeben sich aus der nachfolgenden Beschreibung und werden auch anhand der Zeichnung, die ein Ausführungsbeispiel darstellt, näher erläutert. Dabei zeigt Fig. 1 schematisch einen Querschnitt durch einen nach der gegenständlichen Erfindung gestalteten PKW-Reifen und Fig. 2 einen Detailausschnitt aus dem Gürtel- bzw. Laufstreifenbereich des Reifens nach Fig. 1.

Vorab wird darauf verwiesen, daß sich sämtliche in der Beschreibung erwähnten Abmessungen und Dimensionsangaben einzelner Reifenbauteile auf die Geometrie des Fertigreifens beziehen und daß unter dem Begriff Stahlcord sowohl Corde mit zwei oder mehr Filamenten als auch ein Einzeldraht zu verstehen ist.

Der in Fig. 1 dargestellte Reifen umfaßt einen Laufstreifen 1, einen Gürtel 2, eine einlagige Karkasse 3, zwei Seitenwände 4 und zwei Wulstbereiche 5 mit Wulstkernen 6.

Der zwischen dem Laufstreifen 1 und der Karkasse 3 angeordnete Gürtel 2 besteht aus zwei Gürtellagen 2a, 2b, die jeweils aus in Gummi eingebetteten Stahlcordfestigkeitsträgern bestehen. Die Stahlcorde 12 verlaufen in jeder Lage 2a, 2b parallel zueinander und, relativ zur Umfangsrichtung des Reifens betrachtet, unter einem vergleichsweise kleinen Winkel von ca. 18 bis 28°, wobei die Corde der beiden Lagen einander kreuzen. Die Gürtellagen 2a, 2b gemäß Fig. 2 besitzen Stahlcorde einer 1 x 2-Stahlcordkonstruktion, bei der somit der Stahlcord aus zwei miteinander verdrehten Einzelfilamenten besteht.

Für den Gürtel eines Fahrzeugreifens ist es, insbesondere um den Reifen im Fahrverhalten auch bei höheren Geschwindigkeiten oder bei hochdynamischer Wechselbeanspruchung stabil zu halten, wesentlich, daß der Gürtel Druckkräfte aufnehmen kann. Herkömmliche Gürtelkonstruktionen sind so ausgelegt, daß der Reifen im Gürtelbereich einen Berstdruck > 20 bar aufweist. Gürtelkonstruktionen nach dem Stand der Technik sind daher materialmäßig überdimensioniert, was zu einem hohen Reifengewicht und einem höheren Rollwiderstand beiträgt. Im Rahmen der vorliegenden Erfindung wurde nun festgestellt, daß ein derart hoher Berstdruck im Gürtelbereich nicht erforderlich ist, so lange der Gürtel in der Lage ist, Druckkräfte aufzunehmen.

Um eine merkbare Gewichtsreduktion zu erzielen wird die Fadenteilung (Anzahl der Corde pro 10 cm) in jeder Gürtellage auf einen Wert ≤ 65 herabgesetzt. Gleichzeitig ist jedoch die erforderliche Gürtelfestigkeit zu gewährleisten. Als wesentlicher Faktor in diesem Zusammenhang hat sich eine Kennzahl herausgestellt, die das Produkt aus der Querschnittsfläche A des Stahlcordes (in mm$^2$) der Zugfestigkeit des Festigkeitsträger-Stahles (in N/mm$^2$) und der Fadenteilung (Anzahl der Corde pro 10 cm) ist, wobei diese Kennzahl 14.000 nicht unterschreiten und 28.000 nicht überschreiten sollte.

Wird diese Kennzahl wesentlich kleiner als 14.000 gewählt, ist die erzielbare Gürtelfestigkeit nicht mehr ausreichend, wird die Kennzahl größer als 28.000 gewählt, ist die Auswirkung auf den Rollwiderstand und die Gewichtsreduktion geringer.

Es ist ferner ein Stahl für den Cord zu wählen, dessen Zugfestigkeit zwischen 2.700 und 4.100 N/mm$^2$ beträgt. Stahlcorde mit einer Zugfestigkeit von bis zu 2.900 N/mm$^2$ sind im allgemeinen Corde mit einem Kohlenstoffgehalt von unter 0,8 Gewichtsprozent und werden als Normal Tensile Corde bezeichnet. Corde mit einer höheren Zugfestigkeit bestehen aus einem Stahl, der im allgemeinen mehr als 0,8 Gewichtsprozent Kohlenstoff, insbesondere bis zu 0,92 Gewichtsprozent Kohlenstoff, enthält. Derartige Corde werden üblicherweise als High Tensile Corde bezeichnet.

Es hat sich ferner als besonders vorteilhaft herausgestellt, wenn eine Cordkonstruktion gewählt wird, bei der die Einzelfilamente einen vergleichweise großen Querschnitt aufweisen. So sind etwa ein 1 x 2 Stahlcord oder ein Einzeldraht als Festigkeitsträger besonders geeignet.

Tabelle 1 zeigt Beispiele von Kennzahlen für einen Stahlcord der Konstruktion 1 x 2, welcher somit aus zwei miteinander verdrehten Einzelfilamenten besteht, wobei Filamentdurchmesser von 0,3 mm, 0,35 mm und 0,4 mm herangezogen sind und ein kreisförmiger Filament-Querschnitt angenommen ist. Zugrunde gelegt ist ein Stahlcord der Zugfestigkeit R von 2.700 N/mm$^2$. Die gewählten Fadenteilungen betragen zwischen 40 und 65 Corde pro 10 cm. Kennzahlen außerhalb des erwähnten Bereiches von 14.000 bis 28.000 sind schraffiert.

Tabelle 1:

| Konstruktion | ∅ [mm] | A [mm²] | A x R x epdm [N/dm] | | | | | |
|:---:|:---:|:---:|:---:|:---:|:---:|:---:|:---:|:---:|
| | | | 65 | 60 | 55 | 50 | 45 | 40 |
| 1 x 2 | 0,30 | 0,1414 | 24811 | 22902 | 20994 | 19085 | 17177 | 15268 |
| | 0,35 | 0,1924 | 33770 | 31172 | 28575 | 25977 | 23379 | 20782 |
| | 0,40 | 0,2513 | 44108 | 40715 | 37322 | 33929 | 30536 | 27143 |

Bei einer gewählten Fadenteilung um etwa 50 Corden pro 10 cm innerhalb einer Gürtellage kommt daher ein solcher Cord mit Einzelfilamenten in Frage, deren Durchmesser beispielsweise zwischen 0,3 und 0,35 mm beträgt.

Tabelle 2 zeigt die entsprechenden Kennzahlen für einen Stahlcord gleicher Konstruktion mit einer Zugfestigkeit R von 3.100 N/mm$^2$. Auch hier sind die nicht in Betracht kommenden Kennzahlen schraffiert.

Tabelle 2:

| Konstruktion | ∅ [mm] | A [mm²] | A x R x epdm [N/dm] | | | | | |
|:---:|:---:|:---:|:---:|:---:|:---:|:---:|:---:|:---:|
| | | | 65 | 60 | 55 | 50 | 45 | 40 |
| 1 x 2 | 0,30 | 0,1414 | 28486 | 26295 | 24104 | 21913 | 19721 | 17530 |
| | 0,35 | 0,1924 | 38773 | 35791 | 32808 | 29825 | 26843 | 23860 |
| | 0,40 | 0,2513 | 50642 | 46747 | 42851 | 38956 | 35060 | 31165 |

Auch ein Stahlcord, der ein Einzeldraht ist, kann im Rahmen der vorliegenden Erfindung gut eingesetzt werden. Tabelle 3 und Tabelle 4 zeigen dabei Beispiele von Kennzahlen für einsetzbare Einzeldrähte mit entsprechenden Fadenteilungen im Gürtel, wobei Einzeldrähte mit kreisförmigem Querschnitt angenommen wurden. Den Werten in Tabelle 3 wurde eine Zugfestigkeit R von 2900 N/mm$^2$ zugrunde gelegt, den Werten in Tabelle 4 eine Zugfestigkeit R von 3100 N/mm$^2$. Schraffierte Bereiche sind wiederum jene, die außerhalb der vorliegenden Erfindung liegen.

Tabelle 3:

| Konstruktion | ⌀ [mm] | A [mm²] | A x R x epdm | | | | | |
|---|---|---|---|---|---|---|---|---|
| | | | 65 | 60 | 55 | 50 | 45 | 40 |
| 1 x 1 | 0,35 | 0,0962 | 16885 | 15586 | 14287 | 12989 | 11690 | 10391 |
| | 0,40 | 0,1257 | 22054 | 20358 | 18661 | 16965 | 15268 | 13572 |
| | 0,45 | 0,1590 | 27912 | 25765 | 23618 | 21471 | 19324 | 17177 |
| | 0,50 | 0,1963 | 34459 | 31809 | 29158 | 26507 | 23856 | 21206 |
| | 0,55 | 0,2376 | 41696 | 38488 | 35281 | 32074 | 28866 | 25659 |
| | 0,60 | 0,2827 | 49621 | 45804 | 41987 | 38170 | 34353 | 30536 |

Tabelle 4:

| Konstruktion | ⌀ [mm] | A [mm²] | A x R x epdm | | | | | |
|---|---|---|---|---|---|---|---|---|
| | | | 65 | 60 | 55 | 50 | 45 | 40 |
| 1 x 1 | 0,35 | 0,0962 | 19387 | 17895 | 16404 | 14913 | 13421 | 11930 |
| | 0,40 | 0,1257 | 25321 | 23373 | 21426 | 19478 | 17530 | 15582 |
| | 0,45 | 0,1590 | 32047 | 29582 | 27117 | 24652 | 22187 | 19721 |
| | 0,50 | 0,1963 | 39564 | 36521 | 33478 | 30434 | 27391 | 24347 |
| | 0,55 | 0,2376 | 47873 | 44190 | 40508 | 36825 | 33143 | 29460 |

Erwähnt sei ferner, daß die Stahlcorde jeder Gürtellage, wie bekannt, in eine Gummimischung eingebettet werden, wobei in jeder Lage die Überdeckung des Cordes insgesamt zwischen 0,1 bis 0,15 mm, und zwar beidseitig des Cordes betrachtet, beträgt. Die Corde sind somit relativ dünn mit einer Gummischicht abgedeckt, was sich jedoch als durchaus ausreichend für die Gürtelhaltbarkeit herausgestellt hat.

Bei einem Reifen, der zwei Gürtellagen mit Festigkeitsträgern aus Stahl besitzt, werden vorteilhafterweise beide Gürtellagen gemäß der gegenständlichen Erfindung ausgelegt bzw. gestaltet.

Im Rahmen der vorliegenden Erfindung sind auch Einzeldrähte bzw., bei Konstruktionen mit mehr als einem Draht, Einzelfilamente einsetzbar, deren Querschnitt vom kreisförmigen Querschnitt abweicht. Die Filamente bzw. Einzeldrähte können einen flachen, beispielsweise elliptischen oder rechteckförmigen Querschnitt aufweisen. Von Bedeutung ist nämlich, wie sich aus der Berechnung der Kennzahl ergibt, vorrangig die Querschnittsfläche des eingesetzten Stahlcordes.

Die Erfindung ist ferner auf die beschriebenen Ausführungsbeispiele nicht eingeschränkt. Die Erfindung umfaßt auch andere Stahlcordkonstruktionen, beispielsweise 1 x 3 Konstruktionen mit 3 Filamenten und auch Reifen mit mehr als zwei Gürtellagen, wobei zumindest eine dieser Gürtellagen erfindungsgemäß ausgeführt ist.

**Patentansprüche**

1.  Fahrzeugreifen in Radialbauart mit einem Laufstreifen, einem Paar von Seitenwänden, einem Paar von Wulstbereichen mit Wulstkernen, einer insbesondere einlagigen Karkasse und einem Gürtel mit insbesondere zwei Gürtellagen, welche in Gummi eingebettete Corde aus Stahl aufweisen, die innerhalb einer Gürtellage parallel zueinander verlaufen, wobei die Corde in zumindest einer Gürtellage eine Zugfestigkeit $R \leq 4.000$ N/mm$^2$ und eine Querschnittsfläche A besitzen und in einer Fadenteilung T (Anzahl Corde pro 10 cm) $\leq 65$ angeordnet sind, dadurch gekennzeichnet, daß das Produkt A x R x T $\leq 28.000$ ist, wobei bei einer Zugfestigkeit R des Stahlcordes von 2.700 bis 2.900 N/mm$^2$ A x R x T $\geq 14.000$ und bei einer Zugfestigkeit R des Stahlcordes von 2.900 bis 4.000

$N/mm^2$ A x R x T $\geq$ 16.000 ist.

2. Fahrzeugreifen nach Anspruch 1, dadurch gekennzeichnet, daß der Stahlcord ein Stahlcord der Konstruktion 1 x 2 ist, dessen Querschnittsfläche A zwischen 0,14 und 0,26 $mm^2$ beträgt.

3. Fahrzeugreifen nach Anspruch 2, dadurch gekennzeichnet, daß die Einzelfilamente einen kreisförmigen Querschnitt mit einem Durchmesser zwischen 0,3 bis 0,4 mm besitzen.

4. Fahrzeugreifen nach Anspruch 1, dadurch gekennzeichnet, daß der Stahlcord ein Einzeldraht ist, dessen Querschnittsfläche A 0,09 bis 0,3 $mm^2$ beträgt.

5. Fahrzeugreifen nach Anspruch 4, dadurch gekennzeichnet, daß der Einzeldraht einen kreisförmigen Querschnitt aufweist, dessen Durchmesser zwischen 0,35 bis 0,6 mm, insbesondere zwischen 0,4 bis 0,55 mm, beträgt.

6. Fahrzeugreifen nach einem der Ansprüche 1 bis 5, dadurch gekennzeichnet, daß die Fadenteilung T 40 bis 60 Fäden pro 10 cm beträgt.

7. Fahrzeugreifen mit einem Gürtel aus zwei Gürtellagen, die nach einem oder mehreren der Ansprüche 1 bis 6 ausgelegt sind.

## Claims

1. Vehicle tyre of a radial type of construction, having a tread strip, a pair of sidewalls, a pair of bead regions provided with bead cores, a carcase which is especially single-ply, and a belt provided with especially two belt plies, which have steel cords embedded in rubber, said cords extending parallel to one another within a belt ply, the cords having a tensile strength R $\leq$ 4,000 $N/mm^2$ and a cross-sectional area A in at least one belt ply and being disposed in a filament distribution T (number of cords per 10 cm) $\leq$ 65, characterised in that the product A x R x T is $\leq$ 28,000, A x R x T being $\geq$ 14,000 with a tensile strength R of the steel cord of between 2,700 and 2,900 $N/mm^2$, and A x R x T being $\geq$ 16,000 with a tensile strength R of the steel cord of between 2,900 and 4,000 $N/mm^2$.

2. Vehicle tyre according to claim 1, characterised in that the steel cord is a steel cord of the construction 1 x 2, the cross-sectional area A of said cord being between 0.14 and 0.26 $mm^2$.

3. Vehicle tyre according to claim 2, characterised in that the individual filaments have a circular cross-section with a diameter of between 0.3 and 0.4 mm.

4. Vehicle tyre according to claim 1, characterised in that the steel cord is an individual wire, the cross-sectional area A of which is between 0.09 and 0.3 $mm^2$.

5. Vehicle tyre according to claim 4, characterised in that the individual wire has a circular cross-section, the diameter of which is between 0.35 and 0.6 mm, more especially between 0.4 and 0.55 mm.

6. Vehicle tyre according to one of claims 1 to 5, characterised in that the filament distribution T is between 40 and 60 filaments per 10 cm.

7. Vehicle tyre having a belt formed from two belt plies which are configured according to one or more of claims 1 to 6.

## Revendications

1. Bandage pneumatique pour véhicule, du type à structure radiale comprenant une bande de roulement, une paire de flancs, une paire de zones de talon munies de tringles de talon, une carcasse notamment à une seule couche, et une ceinture présentant notamment deux couches pourvues de câblés en acier noyés dans du caoutchouc et s'étendant parallèlement les uns aux autres à l'intérieur d'une couche de ceinture, les câblés possédant, dans au moins une couche de ceinture, une résistance à la traction R $\leq$ 4 000 $N/mm^2$ et une surface de section transversale A, et étant agencés en une répartition filaire T (nombre de câblés par unité de 10 cm) $\leq$ 65, caractérisé par le fait que le produit A x R x T $\leq$ 28 000, auquel cas A x R x T $\geq$ 14 000 pour une résistance à la traction R du câblé en acier comprise entre 2 700 et 2 900 $N/mm^2$, et A x R x T $\geq$ 16 000 pour une résistance à la traction R du câblé en acier comprise entre 2 900 et 4 000 $N/mm^2$.

6

2. Bandage pneumatique pour véhicule, selon la revendication 1, caractérisé par le fait que le câblé en acier est un câblé en acier de structure 1 x 2, dont la surface de section transversale A mesure entre 0,14 et 0,26 mm$^2$.

3. Bandage pneumatique pour véhicule, selon la revendication 2, caractérisé par le fait que les filaments individuels possèdent une section transversale circulaire, avec un diamètre compris entre 0,3 et 0,4 mm.

4. Bandage pneumatique pour véhicule, selon la revendication 1, caractérisé par le fait que le câblé en acier est un fil métallique individuel dont la surface de section transversale A mesure entre 0,09 et 0,3 mm$^2$.

5. Bandage pneumatique pour véhicule, selon la revendication 4, caractérisé par le fait que le fil métallique individuel présente une section transversale circulaire, dont le diamètre mesure entre 0,35 et 0,6 mm, notamment entre 0,4 et 0,55 mm.

6. Bandage pneumatique pour véhicule, selon l'une des revendications 1 à 5, caractérisé par le fait que la répartition filaire T comprend de 40 à 60 fils par unité de 10 cm.

7. Bandage pneumatique pour véhicule, muni d'une ceinture présentant deux couches agencées selon l'une ou plusieurs des revendications 1 à 6.

# Fig.1

## Fig.2

EP 0 679 543 B1